# EUROPÄISCHE PATENTSCHRIFT

(11) **EP 2 962 352 B1**
(45) Veröffentlichungstag und Bekanntmachung des Hinweises auf die Patenterteilung: **20.05.2026**
(21) Anmeldenummer: 14706298.8
(22) Anmeldetag: 21.02.2014
(51) Int. Cl.: H01M 8/18, H01M 8/02

(54) **ELASTOMERER ENDRAHMEN EINER REDOX-DURCHFLUSSBATTERIE**
ELASTOMERIC END FRAME OF A REDOX FLOW BATTERY
CADRE D'EXTRÉMITÉ ÉLASTOMÈRE D'UNE BATTERIE REDOX À CIRCULATION

(30) Priorität: 01.03.2013 AT 501362013
(43) Veröffentlichungstag der Anmeldung: 06.01.2016
(73) Patentinhaber: CellCube Energy Storage GmbH, 2355 Wiener Neudorf (AT)
(72) Erfinder: BUCSICH, Herbert, A-7013 Klingenbach (AT); HARRER, Martin, A-1040 Wien (AT); POKORNY, Peter, A-Mauerbach 3001 (AT); TRAMPERt, Markus, A-1170 Wien (AT); WHITEHEAD, Adam, A-7000 Eisenstadt (AT)
(74) Vertreter: Patentanwälte Pinter & Weiss OG
(86) Internationale Anmeldenummer: PCT/EP2014/053429
(87) Internationale Veröffentlichungsnummer: WO 2014/131702

(56) Entgegenhaltungen:
- EP-A1- 1 367 301
- US-A1- 2012 156 535

## Beschreibung

Die gegenständliche Erfindung betrifft einen elastomeren Endrahmen einer Redox-Durchflussbatterie mit einer zentralen ersten Vertiefung zur Aufnahme eines Stromabnehmers und einem radial äußeren Rahmen mit einer ersten Stirnfläche, der die zentrale Vertiefung umgibt, und einen Zellstack mit einem solchen Endrahmen.

Redox-Durchflussbatterien bestehen bekanntermaßen aus Zellen, die von elektrisch unterschiedliche geladenen Elektrolyten durchströmt werden. Die Zellen umfassen dabei zwei aneinander gereihte Rahmen, in denen jeweils eine Elektrode angeordnet ist, die durch eine semipermeable Membran, typischerweise eine lon-Austauschmembran, getrennt sind. Zwischen einzelnen Zellen der Redox-Durchflussbatterie ist eine bipolare Platte angeordnet. In den Endrahmen an den axialen Enden der Redox-Durchflussbatterie ist jedoch keine Elektrode wie in den Zellen angeordnet, sondern ein metallischer Stromabnehmer, der mit einem nach außen geführten elektrischen Anschluss der Redox-Durchflussbatterie verbunden ist. Die einzelnen Rahmen der Redox-Durchflussbatterie müssen gegeneinander abgedichtet sein, um einerseits zu verhindern, dass Elektrolyt nach außen dringt (externe Abdichtung), und andererseits, um zu verhindern, dass sich die unterschiedlich geladenen Elektrolyten vermischen (interne Abdichtung), was einen Wirkungsgradverlust bedeuten würde. Problematisch sind aber Leckagen im Bereich des metallischen Stromabnehmers, da ein Elektrolyt am Stromabnehmer unweigerlich Korrosion verursachen würde, was nach einer gewissen Zeit den Totalausfall der Redox-Durchflussbatterie nach sich ziehen würde. Ein Kontakt zwischen Elektrolyt und metallischem Stromabnehmer ist daher zu unterbinden.

In Redox-Durchflussbatterien kommen zwei Typen von Rahmen zum Einsatz, nämlich Rahmen aus elastischen Kunststoffen (Elastomere) und nicht elastischen Kunststoffen, wie z.B. PVC, PP, PE, PTFE, Epoxidharz, etc. Nicht elastische Kunststoffe, zypischerweise thermoplastische Kunststoffe, sind steif und nur innerhalb eines gewissen Temperaturbereichs formbar sind. Elastomere sind formfeste, aber elastisch verformbare Kunststoffe, d.h., dass ein Elastomer nach Deformation wieder in seine ursprüngliche Ausgangsform zurückkehrt.

Zur Abdichtung zwischen steifen Rahmen aus nicht elastischen Kunststoffen kommen in der Regel Dichtelement, wie z.B. O-Ringe, zum Einsatz, die zwischen den steifen Rahmen angeordnet werden und die durch das Zusammenpressen der Rahmen abdichten. Die Dichtelemente werden dazu meistens in Nuten an den Stirnflächen der Rahmen angeordnet. Beispiele dafür finden sich in der EP 1 411 576 A1 oder der WO 2004/079849 A1. Das Problem dabei ist, dass die steifen Rahmen relativ einfach mechanisch beschädigt werden können, z.B. durch Kratzer an der Oberfläche. Dabei hat sich gezeigt, dass schon kleine Kratzer ausreichen, um die Dichtwirkung nachhaltig zu beeinträchtigen. Solche Dichtungen sind auch empfindlich auf Fremdkörper (Haare, Fasern, etc.) auf den Rahmen, die in Zusammenwirken mit den Dichtelementen wieder zu Undichtheiten führen können. Daneben wird der Zusammenbau einer Redox-Durchflussbatterie durch die große Anzahl von notwendigen Dichtelementen, die leicht verrutschen und eingeklemmt werden können, erschwert.

Ebenso sind schon Rahmen aus nicht elastischen Kunststoffen bekannt geworden, die an einer Stirnseite umlaufende, erhabene Rippen angeformt haben, die zur Abdichtung formschlüssig in Nuten der benachbarten Stirnfläche eingreifen. Solche Rahmen sind z.B. aus der US 4,640,876 A oder der US 6,086,643 A bekannt. Auch solche Rahmen sind bzgl. der Dichtwirkung sehr anfällig auf kleinste Beschädigungen der Oberflächen. Ein weiteres Problem solcher Rahmen sind aber die Fertigungstoleranzen bei der Herstellung, in der Regel durch Spritzgießen der Rahmen. Hierbei sind Fertigungstoleranzen von +/-1% üblich. Dadurch kann es aber leicht zu Ausrichtfehler zwischen Rippen und zugehörigen Nuten kommen, insbesondere wenn mehrere Rippen vorgesehen sind, was wiederum zu Undichtheit zwischen den Rahmen führen kann.

Bei elastomeren Stackrahmen mit angeformten erhabenen Dichtelementen, wie Dichtrippen, bräuchte man zwei verschieden ausgeführte Stackrahmen, um zu verhindern, dass im zusammengebauten Zustand Dichtelement an Dichtelement anliegt, was wiederum Probleme mit der exakten Ausrichtung der Dichtelemente mit sich bringen würde. Bei aneinander liegenden Dichtelementen hätte man durch das Verformen der Dichtelemente beim Zusammenbau auch das Problem, sich möglicherweise überkreuzender Dichtelemente. Daneben würde man sich dabei auch bei elastischen Stackrahmen Probleme mit Fremdkörpern (Haare, Fasern, etc.) auf den Dichtflächen oder kleinen Beschädigungen (Kratzern) einhandeln. Daher müsste man bei der Montage die Stackrahmen sehr genau auf Beschädigungen oder Fremdkörper untersuchen, was den Montageaufwand aber deutlich erhöhen würde. All diese Problem würden aber auch wieder zu einer höheren Anfälligkeit auf Undichtheit eines Zellstacks führen. Außerdem würde das auch die Komplexität der Montage einer Redox-Durchflussbatterie erhöhen, da mehr verschiedene Einzelteile benötigt werden, was letztendlich auch die Fehleranfälligkeit beim Zusammenbau erhöht. Aus diesen Gründen werden an sich keine elastomeren Rahmen mit angeformten, erhabenen Dichtelementen verwendet.

Bei elastomeren Rahmen werden aus diesen Gründen die Eigenschaften des elastomeren Materials für die Herstellung einer Abdichtung ausgenutzt, indem die flachen Stirnflächen der aneinander liegenden Stackrahmen aneinander gepresst werden und dadurch eine Abdichtung zwischen den Stackrahmen bewirken. Solche Stackrahmen sind z.B. aus der AT 501 902 A1, der US 2012/0156535 A1 und der AT 501 903 A1 bekannt geworden. Der Vorteil dabei ist, dass die Dichtung durch die aneinander liegenden Stirnflächen selbst bewirkt wird und dadurch keine weiteren Dichtelemente oder sich erhebende Rippen benötigt werden. Außerdem ist ein solcher
elastomerer Stackrahmen mit dichtenden Stirnflächen unempfindlicher gegen Beschädigungen der Oberfläche. Allerdings machen auch hier die Fertigungstoleranzen bei der Herstellung der Rahmen Schwierigkeiten. Zwischen zwei Stackrahmen muss zur Elektrodenplatte, für die interne Dichtheit, und zum benachbarten Stackrahmen, für die externe Dichtheit der Redox-Durchflussbatterie, abgedichtet werden. Aufgrund der Fertigungstoleranzen kann aber nicht an beiden Dichtflächen gleichzeitig sicher abgedichtet werden. Durch die Abmessungen des Stackrahmens kann aber die interne oder die externe Dichtungswirkung in den Vordergrund gestellt werden, indem durch die Dimensionen des Stackrahmens mehr Anpressdruck zwischen Elektrodenplatte und Stackrahmen oder zwischen den beiden Stackrahmen eingestellt wird. In der Regel wird der externen Dichtheit der Vorzug gegeben, da intern eine geringe Leckage zwischen Stackrahmen und Elektrodenplatte kein großes Problem darstellt. Zwischen Stackrahmen und Endrahmen der Redox-Durchflussbatterie ist das aber nicht möglich, da eine solche interne Leckage von Elektrolytflüssigkeit den metallischen Stromabnehmer im Endrahmen durch Korrosion zerstören würde.

Es ist daher eine Aufgabe der gegenständlichen Erfindung, eine Abdichtung zwischen Endrahmen und benachbartem Rahmen eines Zellstacks einer Redox-Durchflussbatterie zu schaffen, die sowohl intern, als auch extern sicher abdichtet.

Diese Aufgabe wird gelöst, indem an der Seite der Vertiefung zur Aufnahme eines Stromabnehmers an der ersten Stirnfläche ein sich entlang des Umfanges des Endrahmens erstreckendes, in Umfangsrichtung geschlossenes, sich aus der ersten Stirnfläche des Rahmens erhebendes erstes Dichtelement angeformt ist. Für den Endrahmen werden damit die Nachteile durch den größeren Aufwand bei der Montage (hervorgerufen durch die Notwendigkeit einer genauen Inspektion des Endrahmens aus oberflächliche Beschädigungen oder Fremdkörper) in Kauf genommen, da man durch das Dichtelement eine Abdichtung schafft, die die Wahrscheinlichkeit verringert, dass Elektrolytflüssigkeit mit dem Stromabnehmer in Kontakt gelangt. Nach außen erfolgt die Abdichtung wie gehabt durch die aneinander liegenden Stirnflächen von elastischen Endrahmen und Stackrahmen.

Wenn am Endrahmen am radial äußeren Rand eine umlaufende Erhebung mit einer zweiten Stirnfläche vorgesehen ist und an der zweiten Stirnfläche ein sich entlang des Umfanges des Endrahmens erstreckendes, in Umfangsrichtung geschlossenes, sich aus der zweiten Stirnfläche erhebendes zweites Dichtelement angeformt ist, kann die externe Dichtwirkung noch zusätzlich erhöht werden. Außerdem wird die Dichtwirkung nicht mehr oder nur mehr unwesentlich durch Herstellungstoleranzen des Endrahmens oder Stackrahmens beeinflusst.

Durch das Vorsehen von mehreren Dichtelementen an der ersten Stirnfläche oder an der zweiten Stirnfläche, lässt sich die Dichtwirkung noch weiter verbessern.

Die gegenständliche Erfindung wird nachfolgend unter Bezugnahme auf die Figuren 1 bis 6 näher erläutert, die beispielhaft, schematisch und nicht einschränkend vorteilhafte Ausgestaltungen der Erfindung zeigen. Dabei zeigt
Fig.1 eine Redox-Durchflussbatterie mit einem Zellstack,
Fig.2 einen Schnitt durch den Zellstack,
Fig.3 und 4 Detailansichten des Endrahmens und des benachbarten Stackrahmens,
Fig.5 eine perspektivische Ansicht eines erfindungsgemäßen Endrahmens und
Fig.6 mögliche Querschnitte der Dichtelemente am Endrahmen.

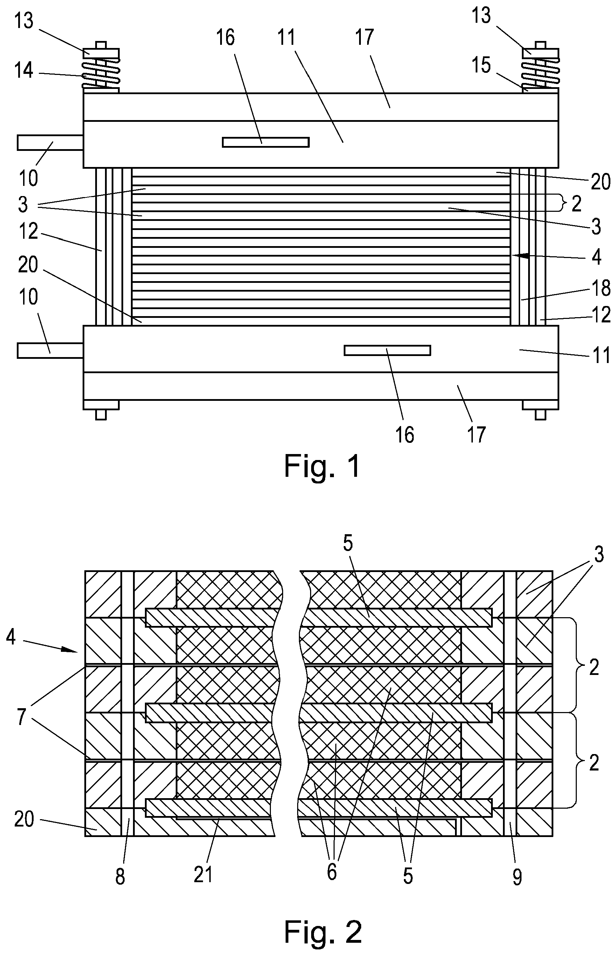

Mit Bezugnahme auf Figs.1 und 2 wird der Aufbau einer Redox-Durchflussbatterie 1 erläutert. Ein Zellstack 4 einer Redox-Durchflussbatterie 1 umfasst eine Mehrzahl von Zellen 2, die wiederum jeweils aus zwei Stackrahmen 3 gebildet werden. Ein Stackrahmen 3 ist aus einem Elastomer, wie z.B. ein polyolefinisch thermoplastisches Elastomer (TPE oder TPO), wie z.B. Santoprene^{®}, oder ein thermoplastisches Vulkanat (TPV), gefertigt, insbesondere in einem Spritzgießverfahren. Das Rahmenmaterial weist z.B. eine Härte im Bereich von 40 - 95 Shore A, bevorzugt 60 - 75 Shore A, auf. Zwischen zwei Stackrahmen 3 einer Zelle 2 ist jeweils eine semipermeable Membran 7, typischerweise eine lon-Austauschmembran (entweder Kation- oder Anion-Austauschmembran, z.B. Nafion^{®}) angeordnet. Zwischen zwei benachbarten Zellen 2 ist Elektrodenplatte 5, z.B. eine bipolare Platte, angeordnet, wobei die Elektrodenplatte 5, wie hier gezeigt, in Vertiefungen in den Stackrahmen 3 eingelegt sein kann. Die Stackrahmen 3 haben zentrale, durchgehende Ausnehmungen, in denen jeweils Elektroden 6, z.B. Matten aus Karbonfasern, angeordnet sind. Über Bohrungen 8, 9 in den Stackrahmen 3 werden elektrisch unterschiedlich geladene Elektrolytflüssigkeiten durch die Zellen 2 gepumpt, wobei die Elektroden 6 jeder Halbzelle einer Zelle 2 von einer anderen Elektrolytflüssigkeit durchströmt wird. Die Elektrolytflüssigkeiten können von außen über Elektrolytflüssigkeitsanschlüsse 10 zu- und abgeführt werden und werden dann intern über ein Kanalsystem verteilt. Dadurch kommt es wie hinlänglich bekannt durch elektrochemische Vorgänge zur Erzeugung von elektrischem Strom bzw. zu einer Aufladung der Redox-Durchflussbatterie 1, oder genauer der Elektrolytflüssigkeiten.

Die Abdichtung zwischen den Stackrahmen 3 erfolgt über die aneinander liegenden Stirnflächen der Stackrahmen 3. Da die Stackrahmen 3 aus einem Elastomer gefertigt und folglich elastisch sind, wird bei einem ausreichenden Druck die Dichtheit zwischen den Stackrahmen 3 bzw. Zellen 2 bewirkt.

Der Zellstack 4 wird zwischen zwei starren Endplatten 11 angeordnet und durch Spannmittel, wie z.B. durchreichende Bolzen 12, die mittels Muttern 13, Beilagscheiben 15 und Federn 14 verspannt werden, zusammengepresst. An den Endplatten 11 kann weiters ein elektrischer Anschluss 16 vorgesehen sein, über den die Redox-Durchflussbatterie 1 mit einem externen Stromkreis verbunden werden kann. Weiters sind an den Endplatten 11 Anschlüsse 10 für die Zu- und Abführung der Elektrolytflüssigkeit vorgesehen. Die beiden Endplatten 11 sind hier weiters zwischen zwei Druckplatten 17 angeordnet, die durch das Spannmittel zusammengedrückt werden. Selbstverständlich kann auch jedes andere geeignete Spannmittel eingesetzt werden. Um ein Setzen der elastischen Stackrahmen 3 durch den Anpressdruck zu verhindern, kann zwischen den Endplatten 11 auch ein Anschlag bzw. Abstandshalter 18 vorgesehen sein. Anstelle der Endplatte 11 und der Druckplatte 17 kannn natürlich auch nur eine einzige Platte verwendet werde.

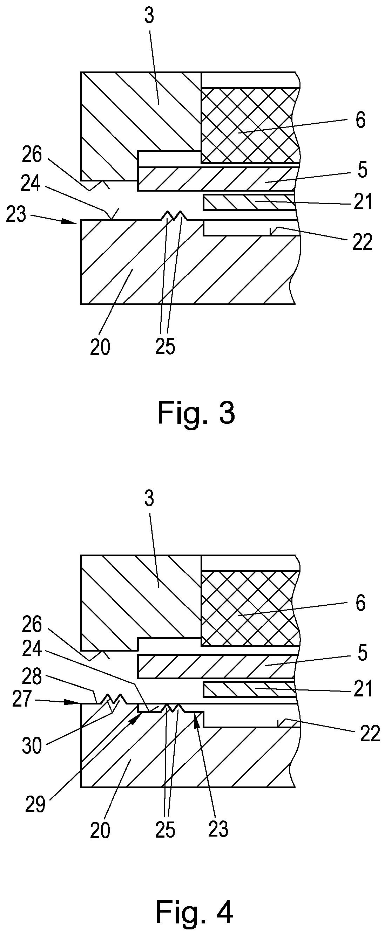

Der Zellstack 4 wird an den beiden axialen Enden durch jeweils einen Endrahmen 20, der an der Endplatte 11 anliegt, abgeschlossen. Im Endrahmen 20, z.B. in einer Ausnehmung an einer Stirnseite des Endrahmens 20, ist ein metallischer Stromabnehmer 21 angeordnet, der mit einem elektrischen Anschluss 16 verbunden ist. Der Stromabnehmer 21 ist z.B. aus Kupfer oder Aluminium gefertigt, eventuell mit einer äußeren Beschichtung mit einem elektrisch leitenden Material. Die Beschichtung ist z.B. aus Zn, Sn, Ni, Pb, Sb, Cd, Cr, C, In oder einer Legierung daraus. Ebenso sind anorganische Verbindungen, wie z.B. Oxide, Hydroxide, Carbide, Phosphide, Sulphide, Boride, etc., oder elektrisch leitende Polymere als Beschichtung denkbar. Gleichfalls sind auch Zwischenschichten, z.B. aus Ni, zwischen der Beschichtung und dem Grundmaterial möglich. Ein Stromabnehmer 21 könnte z.B. aus 200µm Aluminium gefertigt sein mit einer Zwischenschicht aus 5µm Ni und einer äußeren Beschichtung aus 10-100µm Sn. Der Endrahmen 20 wird nachfolgend unter Bezugnahme auf die Fig.3 näher beschrieben.

Der Endrahmen 20 hat eine erste zentrale Vertiefung 22, in die der Stromabnehmer 21 angeordnet ist. Um die zentrale erste Vertiefung 22 herum bildet der Endrahmen 20 einen radial äußeren Rahmen 23 mit einer ersten Stirnfläche 24 an der Seite der ersten Vertiefung 22, die dem benachbarten Stackrahmen 3 zugewandt ist. An der ersten Stirnfläche 24 des Rahmens 23 bzw. der Endrahmens 20 ist ein erstes Dichtelement 25 angeformt, das sich entlang des Umfangs des Endrahmens 20 erstreckt, in Umfangsrichtung geschlossen ist und sich aus der ersten Stirnfläche 24 erhebt. "Angeformt" bedeutet hier, dass das Dichtelement 25 integraler Bestandteil des Endrahmens 20 ist und im Formgebungsverfahren (z.B. Spritzgießen) des Endrahmen 20 mitgeformt wird. Das Dichtelement 25 ist damit vorzugsweise aus demselben Material wie der Endrahmen 20 gefertigt. Im gezeigten Ausführungsbeispiel sind zwei solche Dichtelemente 25 nebeneinander angeordnet. Dieses erstes Dichtelement 25 wirkt im zusammengebauten Zellstack 4 mit der Elektrodenplatte 5 der benachbarten Zelle 2 durch den wirkenden Anpressdruck dichtend zusammen. Durch den Anpressdruck wird das Dichtelement 25 elastisch verformt und bildet so eine wirkungsvolle Abdichtung zwischen Elektrodenplatte 5 und Endrahmen 20, die eine interne Undichtheit unterbindet und damit verhindert, dass Elektrolytflüssigkeit mit dem Stromabnehmer 21 in Kontakt kommt. Die erste Stirnfläche 24 kann weiters mit der gegenüberliegenden Stirnfläche 26 des benachbarten Stackrahmens 3 dichtend zusammenwirken, um auch eine externe Abdichtung zu schaffen, die ein Nachaußendringen von Elektrolytflüssigkeit aus dem Zellstack 4 verhindert.

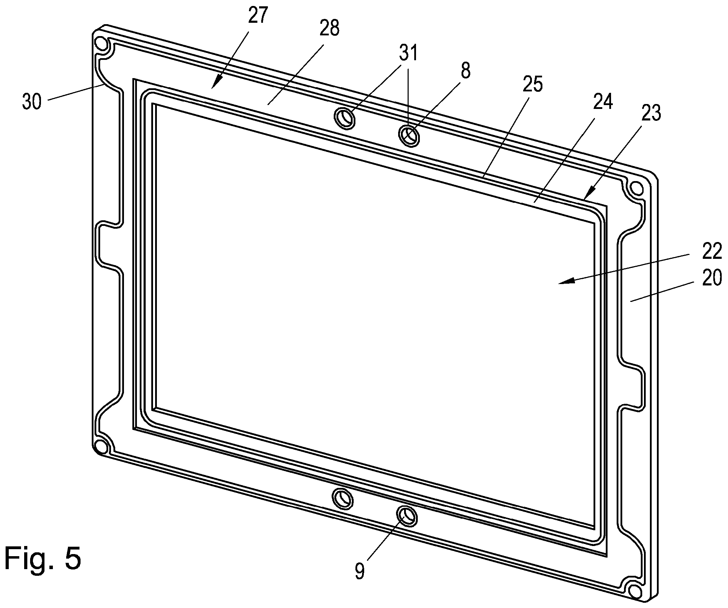

Eine andere vorteilhafte Ausgestaltung der Abdichtung zwischen Endrahmen 20 und benachbartem Stackrahmen 3 wird mit Bezugnahme auf die Figs. 4 und 5 beschrieben. Hier ist an der Seite der ersten Vertiefung 22 am äußeren Rand des Endrahmens 20 bzw. des Rahmens 23 eine um den Umfang des Endrahmens 20 umlaufende Erhebung 27 mit einer zweiten Stirnfläche 28 vorgesehen. Dadurch ist der Endrahmen 20 mit einer zentralen ersten Vertiefung 22 zur Aufnahme des Stromabnehmers 21 und radial außerhalb der ersten Vertiefung mit einer zweiten Vertiefung 29 mit der Stirnfläche 24 zur Aufnahme der Elektrodenplatte 5 der benachbarten Zelle 2 ausgeführt. An der zweiten Stirnfläche 28 des Endrahmens 20 ist ein zweites Dichtelement 30 angeformt, das sich entlang des Umfangs des Endrahmens 20 erstreckt, in Umfangsrichtung geschlossen ist und sich aus der zweiten Stirnfläche 28 erhebt. Im gezeigten Ausführungsbeispiel sind zwei solche Dichtelemente 30 nebeneinander angeordnet. Dieses zweite Dichtelement 30 wirkt im zusammengebauten Zellstack 4 durch den wirkenden Anpressdruck mit der gegenüberliegenden Stirnfläche 26 des benachbarten Stackrahmens 3 dichtend zusammen. Durch den Anpressdruck wird das zweite Dichtelement 30 elastisch verformt und bildet so eine wirkungsvolle Abdichtung zwischen Endrahmen 20 und benachbartem Stackrahmen 3, die eine externe Undichtheit und damit ein Nachaußendringen von Elektrolytflüssigkeit aus dem Zellstack 4 verhindert.

Ebenso können um die Bohrungen 8, 9 solche Dichtelemente 31 an der ersten Stirnfläche 24 oder zweiten Stirnfläche 28 vorgesehen sein, um hier die Abdichtung zu verbessern, wie in Fig. 5 dargestellt.

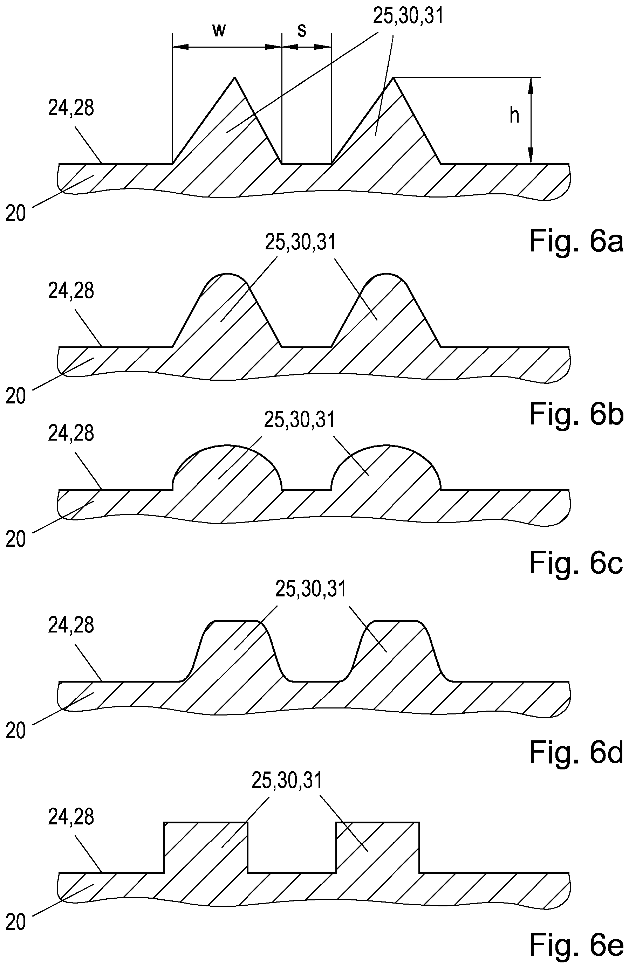

In den Fig.6a bis 6e sind denkbare Querschnittsformen der Dichtelemente 25, 30, 31 dargestellt. Die Dichtelemente 25, 30, 31 können z.B. dreieckig (Fig.6a), kuppelförmig (Fig.6b), halbkreisförmig oder in Form eines Kreissegments (Fig.6c), in Form einer abgeflachten Kurve oder eines Polygonzuges (Fig.6d), rechteckig (Fig.6e). Ein Dichtelement ist dabei bevorzugt mit einer Breite w im Bereich von 0,1 bis 10mm und mit einer Höhe h im Bereich von 5 bis 500µm ausgeführt. Falls mehrere Dichtelemente 25, 30, 31 nebeneinander angeordnet sind ist der Abstand s dazwischen bevorzugt im Bereich von 0,5 bis 30mm.

## Patentansprüche

1. Elastomerer Endrahmen einer Redox-Durchflussbatterie mit einer zentralen ersten Vertiefung (22) zur Aufnahme eines Stromabnehmers (21) und einem radial äußeren Rahmen (23) mit einer ersten Stirnfläche (24), der die zentrale Vertiefung (22) umgibt, **dadurch gekennzeichnet, dass** an der Seite der Vertiefung (22) an der ersten Stirnfläche (24) ein sich entlang des Umfanges des Endrahmens (20) erstreckendes, in Umfangsrichtung geschlossenes, sich aus der ersten Stirnfläche (24) des Rahmens (23) erhebendes erstes Dichtelement (25) angeformt ist.

2. Elastomerer Endrahmen nach 1, **dadurch gekennzeichnet, dass** am Endrahmen (20) am radial äußeren Rand eine umlaufende Erhebung (27) mit einer zweiten Stirnfläche (28) vorgesehen ist und an der zweiten Stirnfläche (28) ein sich entlang des Umfanges des Endrahmens (20) erstreckendes, in Umfangsrichtung geschlossenes, sich aus der zweiten Stirnfläche (28) erhebendes zweites Dichtelement (30) angeformt ist.

3. Elastomerer Endrahmen nach Anspruch 1 oder 2, **dadurch gekennzeichnet, dass** an der ersten Stirnfläche (24) oder an der zweiten Stirnfläche (28) mehrere Dichtelemente (25, 30) angeformt sind.

4. Zellstack einer Redox-Durchflussbatterie mit einer Mehrzahl von aneinander liegenden Zellen (2) aus jeweils zwei benachbarten Stackrahmen (3), wobei benachbarte Zellen (3) durch Elektrodenplatten (5) voneinander getrennt sind, und mit einem Endrahmen (20) nach einem der Ansprüche 1 bis 3, **dadurch gekennzeichnet, dass** der Endrahmen (20) am axialen Ende des Zellstacks (4) an der benachbarten Zelle (2) anliegend angeordnet ist, wobei der Stromabnehmer (21) im Endrahmen (20) und das erste Dichtelement (25) an der Elektrodenplatte (5) der benachbarten Zelle (2) anliegt und die erste Stirnfläche (24) der Endplatte (20) an der zugewandten Stirnfläche (26) des benachbarten Stackrahmens (3) anliegt.

5. Zellstack nach Anspruch 4, **dadurch gekennzeichnet, dass** das zweite Dichtelement (30) an der zugwandten Stirnfläche (26) des benachbarten Stackrahmens (3) anliegt.

## Claims

1. Elastomeric end frame of a redox flow battery with a central first recess (22) to receive a current collector (21) and a radially outer frame (23) with a first end face (24) which surrounds the central recess (22), **characterized in that** on the side of the recess (22) a first sealing element (25), which extends along the periphery of the end frame (20), is closed in the peripheral direction and protrudes from the first end face (24) of the frame (23), is integrally molded on the first end face (24).

2. Elastomeric end frame according to claim 1, **characterized in that** a peripheral raised portion (27) with a second end face (28) is provided on the end frame (20) on the radially outer edge, and a second sealing element (30), which extends along the periphery of the end frame (20), is closed in the peripheral direction and protrudes from the second end face (28), is integrally molded on the second end face (28).

3. Elastomeric end frame according to claim 1 or 2, **characterized in that** a plurality of sealing elements (25, 30) are formed on the first end face (24) or on the second end face (28).

4. Cell stack of a redox flow battery with a plurality of abutting cells (2) formed in each case of two adjacent stack frames (3), wherein adjacent cells (2) are separated from one another by electrode plates (5), and with an end frame (20) according to one of claims 1 to 3, **characterized in that** the end frame (20) is arranged abutting the adjacent cell (2) at the axial end of the cell stack (4), wherein the current collector (21) in the end frame (20) and the first sealing element (25) abuts the electrode plate (5) of the adjacent cell (2) and the first end face (24) of the end plate (20) abuts the facing end face (26) of the adjacent stack frame (3).

5. Cell stack according to Claim 4, **characterized in that** the second sealing element (30) abuts the facing end face (26) of the adjacent stack frame (3).

## Revendications

1. Cadre d'extrémité en élastomère d'une batterie rédox comportant une première cavité centrale (22) pour la réception d'un collecteur de courant (21) et un cadre (23) radialement extérieur comportant une première surface frontale (24) qui entoure la cavité centrale (22), **caractérisé en ce qu'**un premier élément d'étanchéité (25) s'étendant le long de la circonférence du cadre d'extrémité (20), fermé dans la direction circonférentielle et sortant de la première surface frontale (24) du cadre (23) est formé sur le côté du renfoncement (22) sur la première surface frontale (24).

2. Cadre d'extrémité en élastomère selon la revendication 1,
**caractérisé en ce qu'**est prévue sur le cadre d'extrémité (20), sur le bord radialement extérieur, une élévation périphérique (27) comportant une seconde surface frontale (28) **et en ce qu'**est formé sur la seconde surface frontale (28) un second élément d'étanchéité (30) s'étendant le long de la circonférence du cadre d'extrémité (20), fermé dans la direction circonférentielle et sortant de la seconde surface frontale (28).

3. Cadre d'extrémité en élastomère selon la revendication 1 ou 2, **caractérisé en ce que** plusieurs éléments d'étanchéité (25, 30) sont formés sur la première surface frontale (24) ou sur la seconde surface frontale (28).

4. Empilement d'éléments d'une batterie rédox comportant une pluralité d'éléments (2) juxtaposés constitués de respectivement deux cadres d'empilement (3) adjacents, dans lequel des éléments (3) adjacents sont séparés les uns des autres par des plaques d'électrodes (5), et comportant un cadre d'extrémité (20) selon l'une des revendications 1 à 3, **caractérisé en ce que** le cadre d'extrémité (20) est disposé à l'extrémité axiale de l'empilement d'éléments (4) de manière à reposer contre l'élément (2) adjacent, dans lequel le collecteur de courant (21) repose dans le cadre d'extrémité (20) et le premier élément d'étanchéité (25) repose contre la plaque d'électrode (5) de l'élément (2) adjacent et la première surface frontale (24) de la plaque d'extrémité (20) repose contre la surface frontale (26) lui faisant face du cadre d'empilement (3) adjacent.

5. Empilement d'éléments selon la revendication 4, **caractérisé en ce que** le second élément d'étanchéité (30) repose contre la surface frontale (26) lui faisant face du cadre d'empilement (3) adjacent.
